# EUROPEAN PATENT SPECIFICATION

(11) **EP 2 070 849 B1**
(45) Date of publication and mention of the grant of the patent: **02.11.2011**
(21) Application number: 08171477.6
(22) Date of filing: 12.12.2008
(51) Int. Cl.: B65G 61/00

(54) **Compact,manually controlled depalletizing machine**
Kompakte, manuell gesteuerte Abpalettiermaschine
Machine de dépalettisation compacte commandée manuellement

(30) Priority: 14.12.2007 IT TO20070900; 31.10.2008 IT TO20080809
(43) Date of publication of application: 17.06.2009
(73) Proprietor: OMA S.r.l., 37069 Villafranca di Verona (IT)
(72) Inventor: BALDI, Giampietro, 37069, VILLAFRANCA DI VERONA (IT)
(74) Representative: Jorio, Paolo

(56) References cited:
- EP-A- 0 118 033
- EP-A- 1 314 664
- FR-A- 2 685 309

## Description

The present invention relates to a compact, manually controlled depalletizing machine according to the preamble of claim 1, as disclosed by EP-A-0 118 033.

More in detail, the present invention relates to a manually controlled machine for manually unpacking pallets of glass bottles or similar products; use to which the following description refers purely by way of example, without this implying any loss of generality.

As known, depalletizing machines which are able to automatically unpack a "pallet of glass bottles" and output a sequence of loose bottles, ready to be conveyed to other machines, are often used in bottling industry.

The "pallets of glass bottles", in fact, consist of a certain number of layers of glass bottles staked on one another, on a substantially rectangular transport platform so as to form, once packed, an easily transportable single block, while each layer of bottles consists of a certain number of rows of glass bottles, arranged parallel to one another and side-by-side on a supporting tray or flap, resting on the layer of bottles immediately underneath.

Given the weight of the glass bottles, most of the currently known depalletizing machines for "pallets of glass bottles" are essentially formed by a substantially parallelepiped-shaped, rigid supporting framework, appropriately anchored to the ground; by a transport platform of the pallet to be unpacked, which is generally placed in the middle of the framework, on the ground level; by a storing shelf of the loose bottles which is fixed to the framework at a predetermined height from the ground, next to and over the pallet transport platform; and finally a gripping head which is movable on the framework in horizontal and vertical direction, over the transport platform of the pallet and the bottle storing shelf, and is provided with a bottle gripping device so to be able to pick up a predetermined number of rows of bottles from the top of the pallet standing on the transport platform, and then leaving such rows of bottles on the storing shelf immediately adjacent to the aforesaid pallet transport platform.

More in detail, the bottle gripping device is able to grip an entire layer of bottles, or a part thereof, from the top of the pallet standing on the transport platform, and generally consists of a series of inflatable air bladders of elongated tubular shape, conventionally referred to as "inflatable blades" which are horizontally fixed on the gripping head frame parallel to one another, thus copying the spatial distribution of the bottle rows which form each layer of the pallet. The "inflatable blades" are further connected to a pneumatic circuit which is able to inflate or deflate them on command.

When stops on the top of the pallet being unpacked, the gripping head is adapted to place the "inflatable blades" between the single rows of bottles which form the layer of bottles, so that the necks of the glass bottles of each row of bottles are arranged between two adjacent "inflatable blades", while the pneumatic circuit is able to inflate all the "inflatable blades" at the same time so to entrap the bottle necks between two adjacent "inflatable blades", thus securing each row of bottles to the gripping head frame.

The above-described depalletizing machines are obviously also provided with a gripping-head moving system which, controlled by an electronic control unit, is able to move the gripping head on the framework in horizontal and vertical direction, from the pallet transport platform to the bottle storing shelf, and vice versa, so as to unpack the pallet of bottles in a completely automatic manner.

While optimally achieving the purpose, the above-described automatic depalletizing machines are unfortunately large in size, which limits their use in small-sized bottling plants where the space available for machinery is extremely small.

Additionally, given the non-negligible weight of the bottles, the gripping-head moving system is relatively complex and costly to be implemented, thus heavily affecting the overall manufacturing costs of the above-described machine.

Aim of the present invention is to provide a depalletizing machine for glass bottles and similar products which is more cost-effective to be constructed and, more importantly, which is much smaller than the currently known machines.

In accordance with these aims, according to the present invention there is provided a compact, manually controlled depalletizing machine as set forth in claim 1 and preferably, though not necessarily, in any one of the dependent claims.

The present invention will now be described with reference to the accompanying drawings, which show a non-limitative embodiment thereof, in which:
- figure 1 is a side view of a machine made according to the teachings of the present invention, with parts in section and parts removed for clarity;
- figure 2 is a front view of the depalletizing machine shown in figure 1, with parts removed for clarity;
- figure 3 is a plan view of the depalletizing machine shown in figures 1 and 2, with parts in section and parts removed for clarity; while
- figure 4 is a side view of a first constructional variation of the depalletizing machine shown in the previous figures;
- figure 5 is a front view of the depalletizing machine shown in figure 4, with parts removed for clarity; while
- figure 6 is a plan view of a second constructional variation of the depalletizing machine shown in the previous figures.

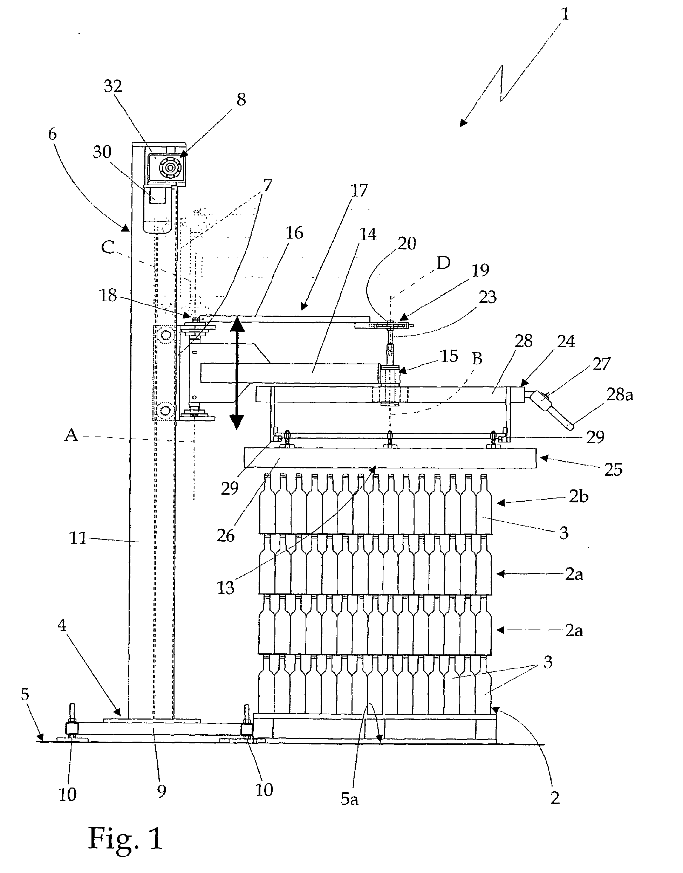

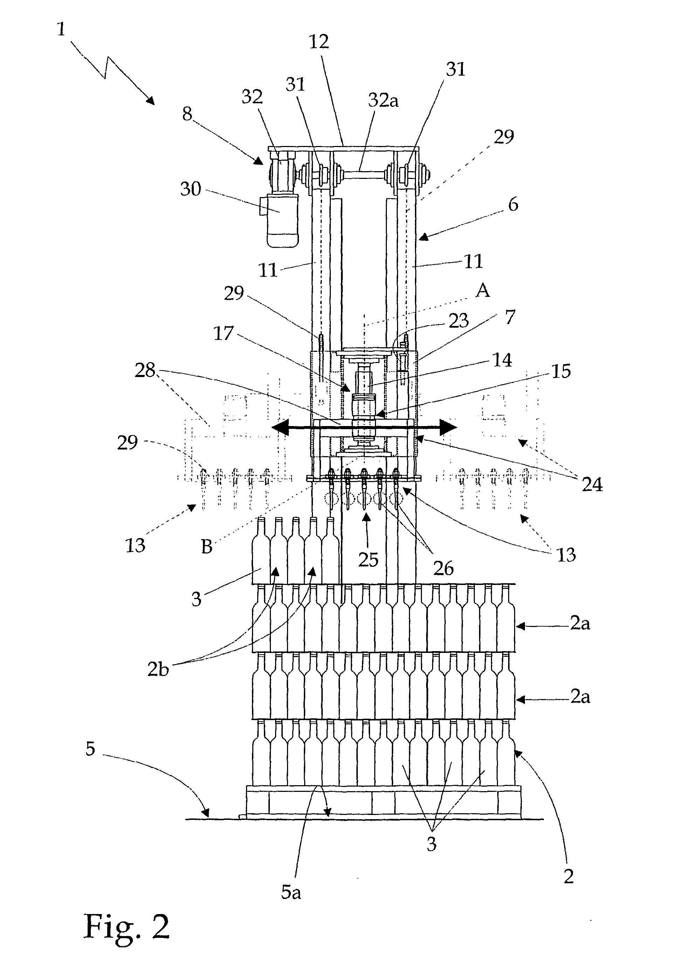

With reference to figures 1 and 2, number 1 indicates as a whole a compact depalletizing machine by means of which a person may manually unpack, without excessive physical efforts, a pallet 2 of glass bottles or similar products, outputting a sequence of loose glass bottles 3 ready to be conveyed to other machines.

The depalletizing machine 1 may obviously also be used for unpacking pallets containing other types of products, such as glass pots or the like.

Similarly to any other type of "pallet of products", pallets 2 of glass bottles consist of a tidy, compact set of glass bottles 3, which is made of a number of bottle layers 2a stacked on one another on a general transport platform having a preferably, though not necessarily rectangular or square shape so as to form, once packed, a single block which is easy to be transported. Each bottle layer 2a, instead, consists of a given number of bottle rows 2b, parallelly distributed to one another and side-by-side preferably, though not necessarily in a quincunx arrangement.

In particular, in the example shown, bottle pallet 2 consists of four overlapping bottle layers 2a, each of which consists of fifteen bottle rows 2b in a reciprocal quincunx arrangement. Each bottle row 2b instead consists of fifteen bottles 3.

The depalletizing machine 1 comprises a ground supporting base 4, which is adapted to be firmly fixed to the ground 5 by means of a series of anchoring bolts or other anchoring elements of known type, next to the storage area 5a of the pallet, in the periphery of which the pallet 2 to be unpacked is to be laid; a bearing column 6, which overhangingly extends from base 4 in a substantially vertical direction, close to the storage area 5a intended to accommodate the pallet 2 to be unpacked; a head-holder carriage 7, slidingly mounted on the bearing column 6 in vertical direction; and manually controlled carriage moving means 8 which are able to vertically move the head-holder carriage 7 along the bearing column 6, under the exclusive and direct control of the operator operating the machine.

With reference to figures 1, 2 and 3, in the example shown, in particular, base 4 consists of a series of square section, metal tubes 9 which are fixed to one another so as to form a rigid flat framework having a substantially rectangular shape, at the vertexes of which adjustable ground resting feet 10 are arranged, which in turn are fixed to the ground 5 by means of foundation bolts or anchoring bolts of known type.

The bearing column 6 instead is formed by two straight, complex-section metal profiles 11 having their lower ends firmly fixed to the metal tubes 9 forming base 4, and which overhangingly extends from base 4 in a substantially vertical direction, while keeping themselves parallel to one another; and by a series of horizontal stiffening longitudinal members 12, which are able to firmly connect the upper and lower ends of the two metal profiles 11 to each other.

With reference to figures 1, 2 and 3, depalletizing machine 1 is further provided with a gripping head 13, which is overhangingly mounted on the head-holder carriage 7, so to be able to move in vertical direction over the storage area 5a of the pallet 2 to be unpacked, and which is structured so to be able to withhold and release, on command, a predetermined number of bottle rows 2b from the bottle layer 2a arranged on the top of the pallet 2 standing at the storage area 5a.

More specifically, unlike the currently known depalletizing machines, gripping head 13 is fixed in swiveling manner to the end of a bearing arm 14, which overhangingly extends from the head-holder carriage 7 in a substantially horizontal direction, over the storage area 5a of the pallet 2 to be unpacked; is hinged to the head-holder carriage 7 so as to be able to freely move with respect to the aforesaid head-holder carriage 7 with a traverse movement about a first, substantially vertical rotation axis A; and is finally dimensioned so to support the whole weight of the gripping head 13 and of the bottles 3 picked up by the latter.

More specifically, the gripping head 13 is fixed to the end of the bearing arm 14 by means of a rotational connecting joint 15, which allows the gripping head 13 to be able to rotate with respect to the bearing arm 14 about a second rotation axis B locally parallel to axis A, i.e. perpendicular to the ground 5.

In particular, in the example shown the rotational connecting joint 15 is structured so to allow the gripping head 13 to be able to rotate about the axis B with respect to the bearing arm 14 only when the operator manually exerts on the gripping head 13 a force capable of generating a twisting torque higher than a predetermined threshold value, so as to prevent undesired rotations of the gripping head 13 about the axis B when the machine is normally operating.

Furthermore, in the example shown the bearing arm 14 is formed by a rectilinear, square section tubular beam which extends perpendicularly to the axes A and B, and ends in a hub shaped so as to be able to house the rotational joint 15.

With reference to figures 1, 2 and 3, depalletizing machine 1 is further provided with an auxiliary guide arm 16, which overhangingly extends from the head-holder carriage 7 substantially parallel to the bearing arm 14, and has the two ends pivotally fixed one to the head-holder carriage 7 and the other to the gripping head 13, so as to form, with bearing arm 14, a bearing structure 17 having an articulated parallelogram geometry which is able to firmly support the gripping head 13 and its load of bottle rows 2b, while allowing the operator that controls the machine to manually displace the whole gripping head 13 parallelly to the ground 5 along a curved path having the centre on axis A, while the gripping head 13 remains always substantially parallel to itself.

More specifically, guide arm 16 has the first end connected to the body of the head-holder carriage 7 by means of a ball joint 18 of known type, which allows the guide arm 16 to rotate with respect to the head-holder carriage 7 about an axis C parallel to the axes A and B, whereas the second end of the guide arm 16 is connected to the gripping head 13 by means of an elastically deformable connecting member 19, which allows the guide arm 16 to rotate with respect to the body of the gripping head 13 about an axis D parallel to the axes A, B and C, further allowing a temporary variation of the distance between the axes C and D when the operator guiding the machine manually applies on the gripping head 13 a mechanical force higher than a predetermined threshold value.

In particular, in the example shown the guide arm 16 consists of a rectilinear, square section beam which carries the ball joint 18 and the connecting member 19 fixed at the two ends, whereas the connecting member 19 is formed by a slide 20 slidingly mounted on a rectilinear bar 21 which is fixed to the guide arm 16, parallelly to the longitudinal axis L of the latter; of two thrust-bearing helical springs 22 fitted on the rectilinear bar 21 on opposite sides of the slide 20, so as to have one end abutting on slide 20 and the other end abutting on the support which connects the rectilinear bar 21 to the body of guide arm 16; and of a connecting pin 23, which extends coaxially to axis D, has the lower end firmly connected to the body of gripping head 13, and has the upper end engaged in a free revolving manner into the slide 20 located at the end of guide arm 16.

The two helical springs 22 are preloaded in compression so as to reciprocally balance and keep slide 20 stationary approximately in the middle of the rectilinear bar 21 in a stable balanced position, from which the slide 20 may temporarily move away under the bias of external forces; whereas pin 23 is able to rotate on slide 20 only about the axis D thus constraining the gripping head 13 onto the slide 20 movable on guide arm 16.

Obviously, when slide 20 is in the middle of the rectilinear bar 21, the stable balanced position, the distance between the axes C and D is substantially equal to the distance between the axes A and B, while the displacement of slide 20 from the stable balanced position entails a variation of the distance between the axes C and D, and a consequent rotation by a few degrees of the gripping head 13 about the axis B, with respect to the reference position set by the articulated parallelogram geometry.

In other words, the bearing structure 17 having an articulated parallelogram geometry is able to guide the gripping head 13 along a curved path which develops parallel to the ground 5, keeping the gripping head 13 constantly aligned to itself, i.e. with the head longitudinal axis F always parallel to itself; and to further allow the gripping head 13 to rotate by a few degrees about axis B when pushed by the operator, so as to temporality move away from the reference position set by the articulated parallelogram geometry.

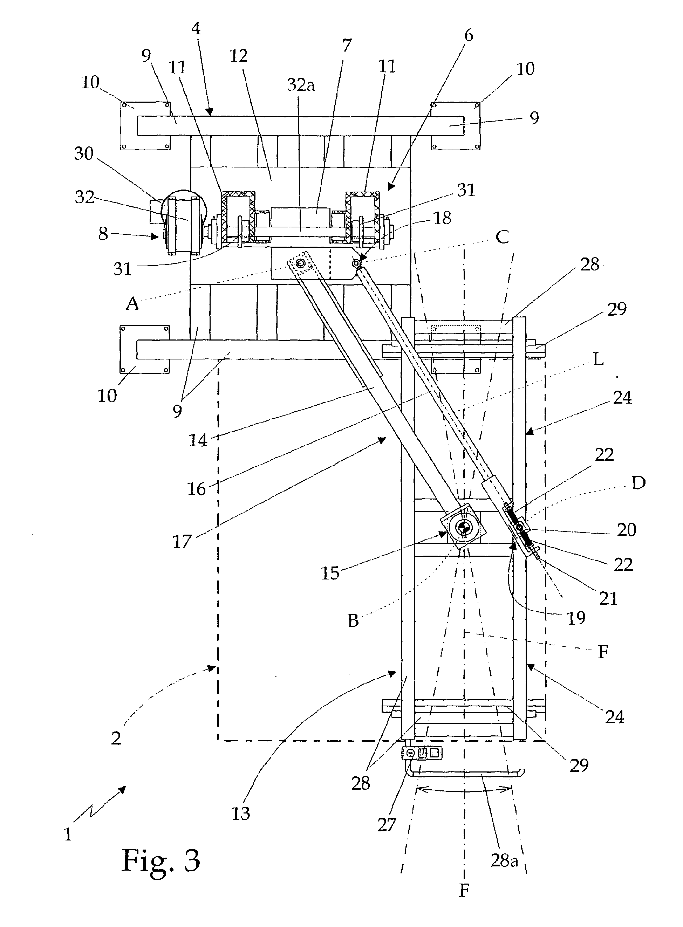

With reference to figures 2 and 3, gripping head 13 instead comprises a rigid supporting frame 24 fixed to the bearing arm 14 via the connecting joint 15 so as to hang over the storage area 5a, and a plurality of gripping devices 25 fixed to the rigid frame 24 so as to be arranged facing the ground 5. The gripping devices 25 are selectively able to withhold the bottle rows 2b which form the layer 2a arranged on the top of the pallet 2, and are distributed on the rigid frame 24 so as to copy the spatial distribution of the rows 2b of bottles which form a single layer of the pallet 2 being unpacked, or of a part thereof.

In fact, it is worth to specify that the number and distribution of the gripping devices 25 on rigid frame 24 varies according to the number of bottle rows 2b intended to be picked up at the same time from the bottle layer 2a arranged on the top of the pallet 2.

In particular, in the example shown the gripping devices 25 consist of a series of elongated, tubular inflatable air bladders 26, which are fixed in horizontal position onto the rigid frame 24 of gripping head 13, so as to be locally substantially parallel to the head longitudinal axis F and to copy the spatial distribution of the bottle rows 2b which form a layer 2a of the pallet 2, and of a number of controlled opening and closing solenoid valves (not shown), which are able to regulate the inflow of pressurized air from the machine pneumatic circuit to the air bladders 26, so as to cause the controlled inflation and deflation thereof in a controlled manner.

The air bladders 26, commonly referred to as "inflatable blades", are widely used in packaging field and will therefore not be described in further detail.

Instead, as regards to the solenoid valves which control the inflation and deflation of the air bladders 26, each of them is able to control the inlet and outlet of pressurized air from one or more air bladders 26, and is adapted to be directly driven by the user of the machine via manually controlled buttons or other type of manually controlled selectors, arranged on a control panel 27 which, in the example shown, is overhangingly fixed onto the rigid frame 24 of gripping head 8, immediately close to a handle which may be gripped by the user in order to horizontally displace the whole gripping head 13.

In other words, activation and deactivation of the gripping devices 25 are manually controlled by the operator only and exclusively via the manually controlled buttons or similar manually controlled devices, placed on control panel 27.

In particular, in the example shown, the air bladders 26 are five in number in order to be able to withhold four bottle rows 2b at the same time, and they are arranged on the bearing structure 12 at a distance one another substantially equal to the distance which separates two adjacent bottle rows 2b, and the gripping head 13 is provided with a single solenoid valve for controlling all the air bladders 26 existing thereon at the same time.

With reference to figures 2, 3 and 4, in the example shown the rigid frame 24 is instead formed by an upper rectangular frame 28 which lays on a horizontal plane locally perpendicular to the axis B, with the longer side edges substantially parallel to the head longitudinal axis F; and by two supporting racks 29 of the gripping devices, each of which extends horizontally under a respective short side of the rectangular frame 28. Rigid frame 24 further comprises two stiffening cross-members, which are adapted to connect the longer side of the rectangular frame 28 with the rotational connecting joint 15 which is placed in the middle of the rectangular frame 28, while the pin 23 connecting the end of guide arm 16 to gripping head 13 protrudes from one of the two longer sides of rectangular frame 28.

Finally, rigid frame 24 is further provided with a substantially L-bent, tubular cylindrical bar 28a, which protrudes from one of the two shorter sides of the rectangular frame 28, so as to form the handle which may be gripped by the user to horizontally move the griping head 13.

With reference to figures 2 and 3, the carriage moving means 8 comprise instead two drive chains 29, which are placed in vertical position, each one inside a respective metal profile 11 of the bearing column 6, and are both firmly connected to the head-holder carriage 7 along one of the vertical segments thereof; and an electric motor 30, which is adapted to move the two chains 29 inside the two metal profiles 11, so as to displace the head-holder carriage 7 along the metal profiles 11 forming the bearing structure 6.

Activation of electric motor 30 is obviously directly controlled by the operator using the machine: in the illustrated example, indeed, the operation of the electric motor 30 is manually controlled by the operator via a joystick or other manually actuated control device placed on control panel 27.

More specifically, each of the two drive chains 29 is wound about a pair of toothed wheels 31 which are pivotally fixed at the ends of the corresponding metal profile 11, while the electric motor 30 is fixed to the upper end of the bearing column 6 so as to protrude therefrom, and is mechanically coupled to the toothed wheels 31 placed at the upper ends of the two metal profiles 11, via a ratiomotor 32 having its own output shaft 32a which extends horizontally through the upper ends of both the metal profiles 11 of the bearing column 6.

The output shaft 32a of ratiomotor 32 is obviously mounted in axially rotating manner within the upper ends of the two metal profiles 11, and the upper toothed wheels 30 of both the drive chains 29 are keyed onto the shaft 32 so as to allow the electric motor 30 to move both the drive chains 29 at the same time, so to either raise or lower the head-holder carriage 7 on the bearing column 6.

Operation of the depalletizing machine is clear: upward and downward displacement of the gripping head 13 is performed by the electric motor 30, or rather by the carriage moving means 8, directly and exclusively controlled by the operator using the machine, whereas the horizontal displacements of the gripping head 13 take place exclusively under the thrust of the operator using the machine.

The bottle rows 2b taken from the top of the to-be-unpacked pallet 2 resting on the ground 5 within the storage area 5a may obviously be left either on a table or a linear belt conveyor temporarily placed next to pallet 2.

Depalletizing machine 1 has many advantages: firstly, in virtue of its particular structure, the above-described depalletizing machine 1 is much smaller than the conventional automatic depalletizing machines for unpacking "pallet of glass bottles", and may be advantageously placed even in the smallest spaces.

Furthermore, depalletizing machine 1 has a very low electricity consumption because electric engine 30 only needs to output the power essential to move up and down the head-holder carriage 7 and the load directly supported thereby. Horizontal displacements of the gripping head 13 are indeed carried out by the operator controlling the machine.

Another advantage of the above-described depalletizing machine 1 is that it may be easily transported from one place to another.

Clearly, changes may be made to the depalletizing machine 1 as described and illustrated herein without, however, departing from the scope of the present invention.

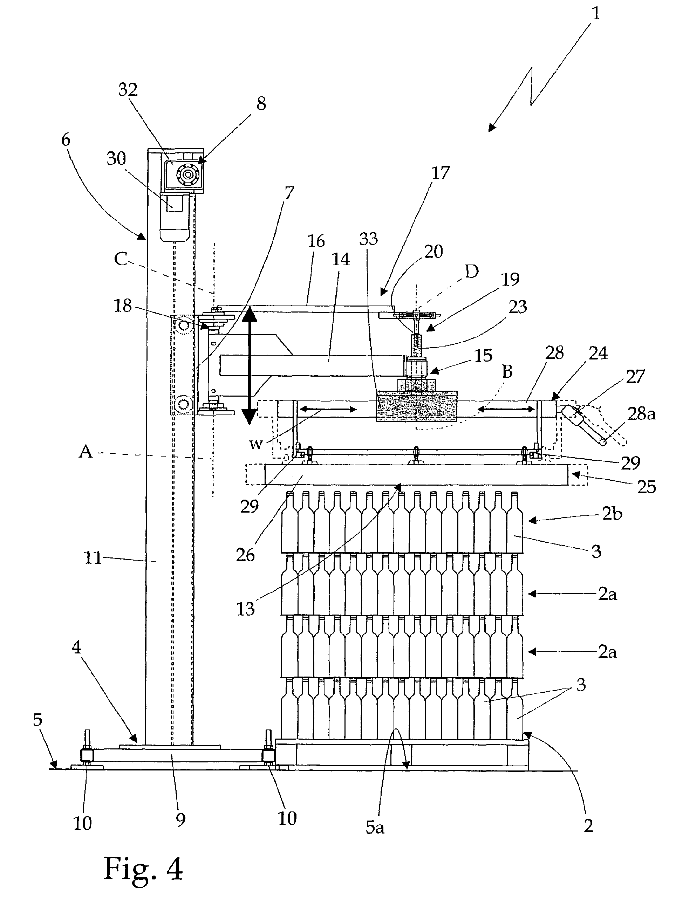

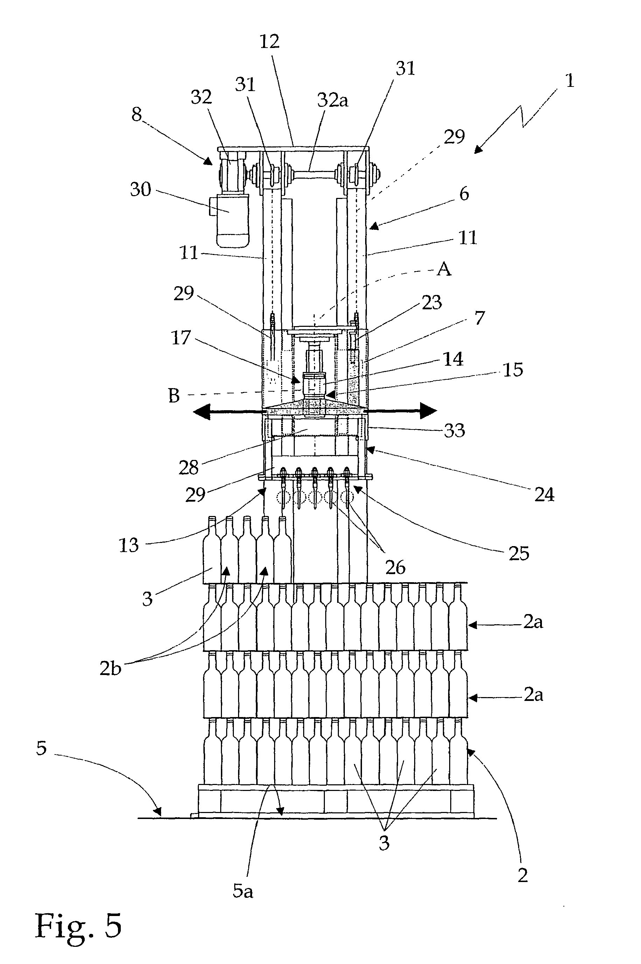

For example, with reference to figures 4 and 5, instead of being directly fixed to the rigid frame 24 of the gripping head 13, the rotational joint 15 is able to connect the end of bearing arm 14 to an intermediate supporting bracket 33 which, in turn, supports the rigid frame 24 of gripping head 13, or rather the rectangular frame 28, allowing the latter to freely move in a substantially horizontal direction w, locally parallel to the head longitudinal axis F, pushed by the operator. Furthermore, direction w of the gripping head 13 is locally substantially perpendicular to the curved path followed by the gripping head 13 during the traversing of the bearing arm 14 about the axis A.

More specifically, the rectangular frame 28 of the rigid frame 24 of gripping head 13 is fixed in an axially sliding manner underneath the supporting bracket 33 and the coupling between the two elements is structured so that the gripping head 13 may move with respect to the bracket 33 parallelly to the head longitudinal axis F, only when the operator manually exerts on the gripping head 13 a horizontal thrust higher than a predetermined threshold value, so as to prevent undesired movements of the gripping head 13 in the direction w, i.e. parallelly to the longitudinal axis F.

Furthermore, in this variation the connecting member 19, instead of connecting the second end of the guide arm 16 to the rigid frame 24 of the gripping head 13, is adapted to connect the second end of the guide arm 16 to the supporting bracket 33, so as to allow the bracket 33, and thus the gripping head 13 integral therewith, to make small rotations about the axis B pushed by the operator, from the reference position established by the articulated parallelogram geometry.

More specifically, in this constructional variation, instead of being firmly fixed to the rectangular frame 28 of the rigid frame 24 of the gripping head 13, the lower end of the pin 23 of connecting member 19 is firmly fixed directly to the supporting bracket 33.

Also in this case, obviously, the two helical springs 22 are preloaded in compression so to reciprocally balance and keep the slide 20 stationary approximately in the middle of the rectilinear bar 21 in a stable balanced position, from which the slide 21 may temporarily move away under the bias of external forces; whereas pin 23 is able to rotate with respect to slide 20 only about axis D, thus constraining the supporting bracket 33 to the slide 20 movable on guide arm 16.

As in the previous case, when the slide 20 is in the middle of the rectilinear bar 21 in the stable balanced position, the distance between axes C and D is substantially equal to the distance between axes A and B, while the displacement of slide 20 from the stable balanced position implies a variation of the distance between axes C and D, and a consequent rotation of the supporting bracket 33 about axis B by a few degrees, with respect to the reference position established by the articulated parallelogram geometry.

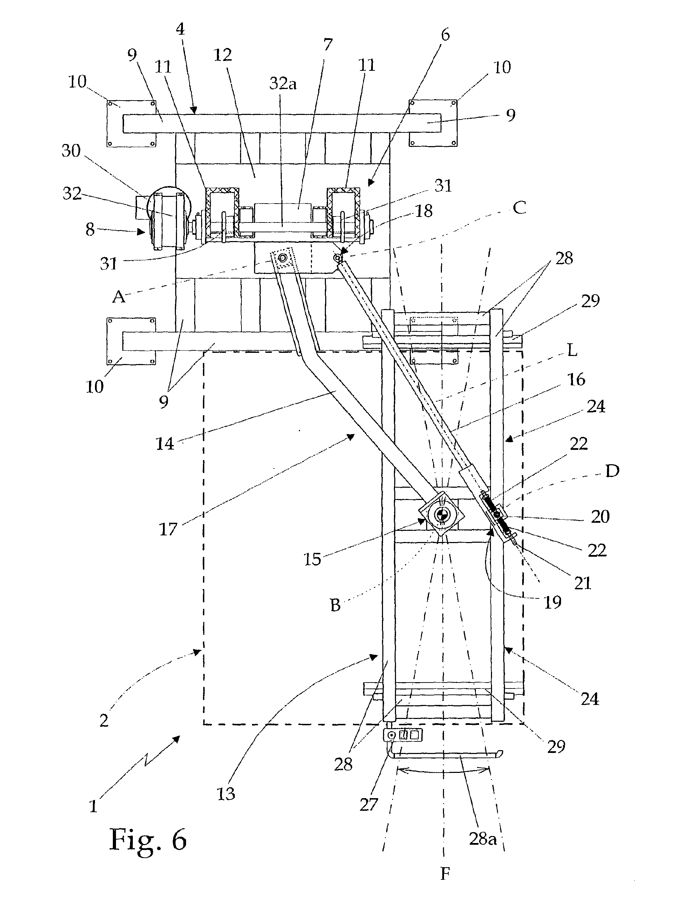

And moreover, with reference to figure 6, instead of consisting of a rectilinear tubular beam, the bearing arm 14 may consists of a square-section tubular beam which lays on a plane substantially perpendicular to the axes A and B, is substantially V-bent with an obtuse angle or an arched banana shape, and ends into a hub shaped so as to be able to accommodate the rotational joint 15.

## Claims

1. Depalletizing machine (1) for unpacking pallets (2) of products (3) comprising a ground supporting base (4), a bearing column (6) which overhangingly extends from the base (4) in a substantially vertical direction, a head-holder carriage (7) slidingly mounted to the bearing column (6) in a substantially vertical direction, carriage moving means (8) adapted to move said head-holder carriage (7) along the bearing column (6), and finally a gripping head (13) attached to the head-holder carriage (7) by means of a bearing structure (17) which overhangingly protrudes from the head-holder carriage (7) itself; the gripping head (13) being structured so as to be able to withhold and release in a controlled manner a predetermined number of products (3) from the top of the pallet (2) to be unpacked; said ground supporting base (4) being adapted to be fixed to the ground (5), close to a storage area (5a) in the periphery of which the pallet (2) to be unpacked is to be laid;
the depalletizing machine (1) being **characterized in that** the carriage moving means (8) are manually controlled moving means, **and in that** the bearing structure is a bearing structure (17) having an articulated parallelogram geometry, which allows the gripping head (13) to carry out horizontal displacements only when pushed by the operator controlling the machine, and which comprises:
- a bearing arm (14) which overhangingly extends from said head-holder carriage (7) in a substantially horizontal direction, over said storage area (5a), is hinged to the body of the head-holder carriage (7) so to be able to freely move with respect to the latter with a training movement about a first, substantially vertical rotation axis (A), and is finally dimensioned so to support the entire weight of the gripping head (13) and the products (3) picked up by the head; and
- an auxiliary guide arm (16) which overhangingly extends from the head-holder carriage (7) substantially parallel to said bearing arm (14), has a first end fixed onto the head-holder carriage (7) so to be able to rotate with respect to the latter about a third rotation axis (C) parallel to said first rotation axis (A), and finally has a second end fixed onto the gripping head (13) so to be able to rotate with respect to the latter about a fourth rotation axis (D) parallel to said first rotation axis (A); said guide arm (16) being connected to the gripping head (13) via an elastically deformable connecting member (19) which allows the guide arm (16) to rotate with respect to the body of the gripping head (13) about said fourth rotation axis (D), further allowing a temporary variation of the distance between said third (C) and fourth rotation axis (D) under the bias of external mechanical forces higher than a predetermined threshold value.

2. A depalletizing machine according to Claim 1, **characterized in that** said gripping head (13) is attached at the end of said bearing arm (14) by means of a rotational connecting joint (15) which allows the gripping head (13) to be able to rotate with respect to the bearing arm (14) about a second rotation axis (B) locally parallel to said first rotation axis (A).

3. A depalletizing machine according to Claim 2, **characterized in that** said rotational connecting joint (15) is structured so to allow the gripping head (13) to rotate with respect to the bearing arm (14), and about said second rotation axis (B), only when the operator manually exerts on the gripping head (13) a force capable of generating a twisting torque higher than a predetermined threshold value.

4. A depalletizing machine according to Claim 2 or 3, **characterized in that** the gripping head (13) is hanging from an intermediate supporting bracket (33) which, in turn, is attached at the end of the bearing arm (14) via said rotational connecting joint (15); the second end of the auxiliary guide arm (16) being fixed onto said supporting bracket (33) so to be able rotate with respect to the latter about said fourth rotation axis (D); said supporting bracket (33) being structured so to allow the gripping head (13) to displace with respect to the supporting bracket (33) itself in a substantially horizontal direction (w).

5. A depalletizing machine according to Claim 4, **characterized in that** the coupling between the gripping head (13) and the supporting bracket (33) is structured so that the gripping head (13) may be displaced with respect to the supporting bracket (33) only when the operator manually exerts on the gripping head (13) a horizontal force higher than a predetermined threshold value.

6. A depalletizing machine according to any one of the foregoing claims, **characterized in that** said first end of the guide arm (16) is connected to said head-holder carriage (7) by means of a ball joint (18).

7. A depalletizing machine according to anyone of the foregoing claims, **characterized in that** said gripping head (13) comprises a rigid supporting frame (24) secured to said articulated parallelogram geometry bearing structure (17) so to be suspended over said storage area (5a), and product gripping means (25) which are fixed onto said rigid frame (24) so to face the ground (5) and are structured so to be able to withhold, on command, one or more rows of products (2b) forming the layer (2a) arranged on the top of the pallet (2).

8. A depalletizing machine according to Claim 7, **characterized in that** said product gripping means (25) are structured so to be able to withhold, on command, one ore more rows of bottles (2b).

9. A depalletizing machine according to anyone of the foregoing claims, **characterized in that** said manually-controlled carriage moving means (8) comprise an electric motor (30) able to move said head-holder carriage (7) along said bearing column (6); the operation of said electric motor (30) being directly controlled by the operator using the machine.

10. A depalletizing machine according to Claim 9, **characterized by** comprising a control panel (27) and that operation of said electric motor (30) is manually controlled by the operator via a first manually operated control device placed on said control panel (27).

11. A depalletizing machine according to Claim 10, **characterized in that** activation and deactivation of said product gripping means (25) are controlled by at least a second manually operated control device placed on said control panel (27).

12. A depalletizing machine according to Claim 10 or 11, **characterized in that** said gripping head (13) further comprises a handle (28a) which the operator may hold to horizontally displace the whole gripping head (13); said control panel (27) being fixed onto said rigid frame (24) either close to or at said handle (28a).

## Patentansprüche

1. Entpalettierungsmaschine (1) zum Entpacken von Paletten (2) mit Produkten (3), die aufweist: eine tragende Unterlage (4), eine tragende Säule (6), die sich von der Unterlage (4) überhängend in einer im Wesentlichen vertikalen Richtung erstreckt, einen Kopfhalterungsschlitten bzw. -wagen (7), der in einer im Wesentlichen vertikalen Richtung verschiebbar an der tragenden Säule (6) montiert ist, Wagenbewegungseinrichtungen (8), die geeignet sind, den Kopfhalterungswagen (7) entlang der tragenden Säule (6) zu bewegen, und schließlich einen Greifkopf (13), der mit Hilfe einer Haltestruktur (17), die von dem Kopfhalterungswagen (7) selbst überhängend vorsteht, an dem Kopfhalterungswagen (7) befestigt ist; wobei der Greifkopf (13) so strukturiert ist, dass er fähig ist, eine vorgegebene Anzahl von Produkten (3) in einer kontrollierten Weise zurückzuhalten und von der Oberseite der Palette (2) loszulassen, um entpackt zu werden; wobei die tragende Unterlage (4) geeignet ist, um an dem Boden (5) nahe einem Lagerbereich (5a) befestigt zu werden, in dessen Umfeld die Palette (2), die entpackt werden soll, gestellt werden soll;
wobei die Entpalettierungsmaschine (1) **dadurch gekennzeichnet ist, dass** die Wagenbewegungseinrichtungen (8) manuell gesteuerte Bewegungseinrichtungen sind, und dass die Haltestruktur eine Haltestruktur (17) ist, die eine gelenkige Parallelogrammgeometrie hat, die zulässt, dass der Greifkopf (13) horizontale Verschiebungen nur dann ausführt, wenn er von dem Bediener, der die Maschine steuert, gedrückt wird, und die aufweist:
- einen Tragarm (14), der sich von dem Kopfhalterungswagen (7) in einer im Wesentlichen horizontalen Richtung überhängend über dem Lagerbereich (5a) erstreckt, der an den Körper des Kopfhalterungswagens (7) eingehängt ist, so dass er fähig ist, sich in Bezug auf den letzteren mit einer Trainingsbewegung um eine erste im Wesentlichen vertikale Drehachse (A) frei zu bewegen, und schließlich dimensioniert ist, um das gesamte Gewicht des Greifkopfs (13) und der von dem Kopf aufgenommenen Produkte (3) zu halten; und
- einen Hilfsführungsarm (16), der sich überhängend von dem Kopfhalterungswagen (7) im Wesentlichen parallel zu dem Tragarm (14) erstreckt, der ein erstes Ende hat, das auf dem Kopfhalterungswagen (7) befestigt ist, so dass er fähig ist, sich in Bezug auf den letzteren um eine dritte Drehachse (C) parallel zu der ersten Drehachse (A) zu drehen, und der schließlich ein zweites Ende hat, das auf dem Greifkopf (13) befestigt ist, um fähig zu sein, sich in Bezug auf den letzteren um eine vierte Drehachse (D) parallel zu der ersten Drehachse (A) zu drehen;
wobei der Führungsarm (16) über ein elastisch verformbares Verbindungselement (19) mit dem Greifkopf (13) verbunden ist, welches dem Führungsarm (16) erlaubt, sich in Bezug auf den Körper des Greifkopfs (13) um die vierte Drehachse (D) zu drehen, und das ferner eine zeitweilige Änderung des Abstands zwischen der dritten (C) und der vierten Drehachse (D) unter der Vorspannung von äußeren mechanischen Kräften, die größer als ein vorgegebener Schwellwert sind, zulässt.

2. Entpalettierungsmaschine nach Anspruch 1, **dadurch gekennzeichnet, dass** der Greifkopf (13) mit Hilfe eines Drehverbindungsgelenks (15), das zulässt, dass der Greifkopf (13) fähig ist, sich in Bezug auf den Tragarm (14) um eine zweite Drehachse (B) zu drehen, die örtlich parallel zu der ersten Drehachse (A) ist, an dem Ende des Tragarms (14) befestigt ist.

3. Entpalettierungsmaschine nach Anspruch 2, **dadurch gekennzeichnet, dass** das Drehverbindungsgelenk (15) derart strukturiert ist, dass es dem Greifkopf (13) nur dann erlaubt, sich in Bezug auf den Tragarm (14) und um die zweite Drehachse (B) zu drehen, wenn der Bediener auf den Greifkopf (13) manuell eine Kraft ausübt, die fähig ist ein höheres Drehmoment als ein vorgegebener Schwellwert zu erzeugen.

4. Entpalettierungsmaschine nach Anspruch 2 oder 3, **dadurch gekennzeichnet, dass** der Greifkopf (13) von einer Zwischenhalteklammer (33) hängt, die ihrerseits über das Drehverbindungsgelenk (15) an dem Ende des Tragarms (14) befestigt ist; wobei das zweite Ende des Hilfsführungsarms (16) auf der Halteklammer (33) fixiert ist, so dass er fähig ist, sich in Bezug auf die letztere um die vierte Drehachse (D) zu drehen; wobei die Halteklammer (33) derart strukturiert ist, dass sie zulässt, dass der Greifkopf (13) sich in Bezug auf die Halteklammer (33) selbst in eine im Wesentlichen horizontale Richtung (w) verschiebt.

5. Entpalettierungsmaschine nach Anspruch 4, **dadurch gekennzeichnet, dass** die Kopplung zwischen dem Greifkopf (13) und der Halteklammer (33) derart strukturiert ist, dass der Greifkopf (13) nur dann in Bezug auf die Halteklammer (33) verschoben werden kann, wenn der Bediener manuell eine horizontale Kraft auf den Greifkopf (13) anwendet, die größer als ein vorgegebener Schwellwert ist.

6. Entpalettierungsmaschine nach einem der vorhergehenden Ansprüche,
**dadurch gekennzeichnet, dass** das erste Ende des Führungsarms (16) mittels eines Kugelgelenks (18) mit dem Kopfhalterungswagen (7) verbunden ist.

7. Entpalettierungsmaschine nach einem der vorhergehenden Ansprüche,
**dadurch gekennzeichnet, dass** der Greifkopf (13) aufweist: einen steifen Halterahmen (24), der an der gelenkigen Haltestruktur (17) mit Parallelogrammgeometrie befestigt ist, um über dem Lagerbereich (5a) aufgehängt zu werden, und Produktgreifeinrichtungen (25), die auf dem steifen Rahmen (24) fixiert sind, so dass sie dem Boden (5) zugewandt sind, und derart strukturiert sind, dass sie fähig sind, auf Kommando eine oder mehrere Reihen mit Produkten (2b), welche die oben auf der Palette (2) angeordnete Schicht (2a) bilden, zurück zu halten.

8. Entpalettierungsmaschine nach Anspruch 7, **dadurch gekennzeichnet, dass** die Produktgreifeinrichtungen (25) derart strukturiert sind, dass sie fähig sind, auf Kommando eine oder mehrere Reihen mit Flaschen (2b) zurück zu halten.

9. Entpalettierungsmaschine nach einem der vorhergehenden Ansprüche,
**dadurch gekennzeichnet, dass** die manuell gesteuerten Wagenbewegungseinrichtungen (8) einen Elektromotor (30) aufweisen, der fähig ist, den Kopfhalterungswagen (7) entlang der tragenden Säule (6) zu bewegen; wobei der Betrieb des Elektromotors (30) direkt von dem Bediener, der die Maschine benutzt, gesteuert wird.

10. Entpalettierungsmaschine nach Anspruch 9, **dadurch gekennzeichnet, dass** sie ein Bedienfeld (27) aufweist, und dass der Betrieb des Elektromotors (30) von dem Bediener über eine erste manuell bediente Steuervorrichtung, die auf dem Bedienfeld (27) angeordnet ist, manuell gesteuert wird.

11. Entpalettierungsmaschine nach Anspruch 10, **dadurch gekennzeichnet, dass** die Aktivierung und Deaktivierung der Produktgreifeinrichtungen (25) durch wenigstens eine manuell betätigte Steuervorrichtung, die auf dem Bedienfeld (27) angeordnet (27) ist, gesteuert werden.

12. Entpalettierungsmaschine nach Anspruch 10 oder 11, **dadurch gekennzeichnet, dass** der Greifkopf (13) ferner einen Griff (28a) aufweist, den der Bediener halten kann, um den ganzen Greifkopf (13) horizontal zu verschieben; wobei das Bedienfeld (27) auf dem steifen Rahmen (24) entweder nahe bei oder an dem Griff (28a) fixiert ist.

## Revendications

1. Machine de dépalletisation (1) pour déballer des palettes (2) de produits (3) comprenant une base de support sur le sol (4), une colonne porteuse (6) qui s'étend en faisant saillie à partir de la base (4) dans une direction sensiblement verticale, un chariot de support de tête (7) monté de manière coulissante sur la colonne porteuse (6) dans une direction sensiblement verticale, des moyens de déplacement de chariot (8) adaptés pour déplacer ledit chariot de support de tête (7) le long de la colonne porteuse (6), et finalement une tête de préhension (13) fixée au chariot de support de tête (7) au moyen d'une structure porteuse (17) qui fait saillie en étant en porte à faux dudit chariot de support de tête (7) lui-même ; la tête de préhension (13) étant structurée afin de pouvoir retenir et libérer d'une manière contrôlée, un nombre prédéterminé de produits (3) de la partie supérieure de la palette (2) à déballer ; ladite base de support sur le sol (4) étant adaptée pour être fixée sur le sol (5), à proximité d'une zone de stockage (5a) dans la périphérie de laquelle la palette (2) à déballer, doit être posée ;
la machine de dépalletisation (1) étant **caractérisée en ce que** les moyens de déplacement de chariot (8) sont des moyens de déplacement commandés manuellement, et **en ce que** la structure porteuse est une structure porteuse (17) ayant une géométrie de parallélogramme articulée, qui permet à la tête de préhension (13) de réaliser les déplacements horizontaux uniquement lorsqu'elle est poussée par l'opérateur qui commande la machine, et qui comprend :
- un bras porteur (14) qui s'étend en saillie à partir dudit chariot de support de tête (7) dans une direction sensiblement horizontale, sur ladite zone de stockage (5a), est articulé par rapport au corps du chariot de support de tête (7) afin de pouvoir se déplacer librement par rapport à ce dernier avec un mouvement d'entraînement autour d'un premier axe de rotation sensiblement vertical (A), et est finalement dimensionné pour supporter tout le poids de la tête de préhension (13) et des produits (3) ramassés par la tête ; et
- un bras de guidage auxiliaire (16) qui s'étend en saillie à partir du chariot de support de tête (7) sensiblement parallèlement audit bras porteur (14), a une première extrémité fixée sur le chariot de support de tête (7) afin de pouvoir tourner par rapport à ce dernier autour d'un troisième axe de rotation (C) parallèle audit premier axe de rotation (A), et finalement a une deuxième extrémité fixée sur la tête de préhension (13) afin de pouvoir tourner par rapport à cette dernière autour d'un quatrième axe de rotation (D) parallèle audit premier axe de rotation (A) ;
ledit bras de guidage (16) étant relié à la tête de préhension (13) via un élément de liaison élastiquement déformable (19) qui permet au bras de guidage (16) de tourner par rapport au corps de la tête de préhension (13) autour dudit quatrième axe de rotation (D), permettant en outre une variation temporaire de la distance entre lesdits troisième (C) et quatrième (D) axes de rotation sous la sollicitation des forces mécaniques externes supérieures à une valeur de seuil prédéterminée.

2. Machine de dépalletisation selon la revendication 1, **caractérisée en ce que** ladite tête de préhension (13) est fixée à l'extrémité dudit bras porteur (14) au moyen d'un joint de liaison rotatif (15) qui permet à la tête de préhension (13) de pouvoir tourner par rapport au bras porteur (14) autour d'un deuxième axe de rotation (B) localement parallèle audit premier axe de rotation (A).

3. Machine de dépalletisation selon la revendication 2, **caractérisée en ce que** ledit joint de liaison rotatif (15) est structuré pour permettre à la tête de préhension (13) de tourner par rapport au bras porteur (14), et autour dudit deuxième axe de rotation (B), uniquement lorsque l'opérateur exerce manuellement sur la tête de préhension (13), une force pouvant générer un couple de torsion supérieur à une valeur de seuil prédéterminée.

4. Machine de dépalletisation selon la revendication 2 ou 3, **caractérisée en ce que** la tête de préhension (13) est suspendue à une console de support intermédiaire (33) qui est fixée à son tour à l'extrémité du bras porteur (14) via ledit joint de liaison rotatif (15) ; la deuxième extrémité du bras de guidage auxiliaire (16) étant fixée sur ladite console de support (33) afin de pouvoir tourner par rapport à cette dernière autour dudit quatrième axe de rotation (D) ; ladite console de support (33) étant structurée afin de permettre à la tête de préhension (13) de se déplacer par rapport à la console de support (33) elle-même dans une direction sensiblement horizontale (w).

5. Machine de dépalletisation selon la revendication 4, **caractérisée en ce que** le couplage entre la tête de préhension (13) et la console de support (33) est structuré de sorte que la tête de préhension (13) peut être déplacée par rapport à la console de support (33) uniquement lorsque l'opérateur exerce manuellement, sur la tête de préhension (13), une force horizontale supérieure à une valeur de seuil prédéterminée.

6. Machine de dépalletisation selon l'une quelconque des revendications précédentes, **caractérisée en ce que** ladite première extrémité du bras de guidage (16) est reliée audit chariot de support de tête (7) au moyen d'une articulation sphérique (18).

7. Machine de dépalletisation selon l'une quelconque des revendications précédentes, **caractérisée en ce que** ladite tête de préhension (13) comprend un châssis de support rigide (24) fixé sur ladite structure porteuse (17) à géométrie de parallélogramme articulée afin d'être suspendue à l'aplomb de ladite zone de stockage (5a), et des moyens de préhension de produit (25) qui sont fixés sur ledit châssis rigide (24) pour faire face au sol (5) et sont structurés afin de pouvoir retenir, sur commande, une ou plusieurs rangées de produits (2b) formant la couche (2a) agencée sur la partie supérieure de la palette (2).

8. Machine de dépalletisation selon la revendication 7, **caractérisée en ce que** lesdits moyens de préhension de produit (25) sont structurés pour pouvoir retenir, sur commande, une ou plusieurs rangées de bouteilles (2b).

9. Machine de dépalletisation selon l'une quelconque des revendications précédentes, **caractérisée en ce que** lesdits moyens de déplacement de chariot (8) commandés manuellement comprennent un moteur électrique (30) pouvant déplacer ledit chariot de support de tête (7) le long de ladite colonne porteuse (6); le fonctionnement dudit moteur électrique (30) étant directement commandé par l'opérateur qui utilise la machine.

10. Machine de dépalletisation selon la revendication 9, **caractérisée en ce qu'**elle comprend un tableau de commande (27) et **en ce que** le fonctionnement dudit moteur électrique (30) est manuellement commandé par l'opérateur via un premier dispositif de commande actionné manuellement placé sur ledit tableau de commande (27).

11. Machine de dépalletisation selon la revendication 10, **caractérisée en ce que** l'activation et la désactivation desdits moyens de préhension de produit (25) sont commandées par au moins un deuxième dispositif de commande actionné manuellement placé sur ledit tableau de commande (27).

12. Machine de dépalletisation selon la revendication 10 ou 11, **caractérisée en ce que** ladite tête de préhension (13) comprend en outre une poignée (28a) que l'opérateur peut tenir pour déplacer horizontalement toute la tête de préhension (13) ; ledit tableau de commande (27) étant fixé sur ledit châssis rigide (24) à proximité de ou au niveau de ladite poignée (28a).
